# EUROPEAN PATENT SPECIFICATION

(11) **EP 0 619 079 B1**
(45) Date of publication and mention of the grant of the patent: **03.11.1999**
(21) Application number: 94105487.6
(22) Date of filing: 08.04.1994
(51) Int. Cl.: A23K 1/16, A23K 1/18

(54) **Feed additives for ruminants**
Futterzusätze für Wiederkäuer
Additifs alimentaires destinés aux ruminants

(30) Priority: 08.04.1993 JP 8197993; 24.03.1994 JP 5374194
(43) Date of publication of application: 12.10.1994
(73) Proprietor: Ajinomoto Co., Inc., Tokyo 104 (JP)
(72) Inventor: Shibahara, Susumu, c/o Central Research Lab., Kawasaki-ku, Kawasaki-shi, Kanagawa-ken (JP); Kanno, Naoko, c/o Central Research Lab., Kawasaki-ku, Kawasaki-shi, Kanagawa-ken (JP); Kitamura, Nobuyoshi, c/o Central Research Lab., Kawasaki-ku, Kawasaki-shi, Kanagawa-ken (JP); Suzuki, Hiromi, c/o Central Research Lab., Kawasaki-ku, Kawasaki-shi, Kanagawa-ken (JP); Ikeda, Toru, c/o Central Research Lab., Kawasaki-ku, Kawasaki-shi, Kanagawa-ken (JP)
(74) Representative: Strehl Schübel-Hopf & Partner

(56) References cited:
- EP-A- 0 037 478
- EP-A- 0 404 085
- GB-A- 2 153 199
- US-A- 3 493 652
- US-A- 3 857 968
- US-A- 5 093 128
- PATENT ABSTRACTS OF JAPAN vol. 16, no. 273 (C-0953) 18 June 1992 & JP-A-04 071 451 (DENKA SEIYAKU KK) 6 March 1992

## Description

### Industrial Application Field

The present invention relates to a feed additive composition for ruminants. More particularly, it relates to a feed additive composition for ruminants in which biologically active substances are coated with a coating composition which is stable in a first stomach (rumen) of ruminants and allows the release of biologically active substances in post-abomasum digestive organs, thereby permitting digestion and absorption of the biologically active substances into the post-abomasum digestive organs.

### Related Art

In ruminants such as cattle and sheep, a substantial part of biologically active substances such as amino acids and vitamins is, if directly administered orally, degraded by microorganisms in the rumen and is not effectively used. In this respect, ruminal by-pass pharmaceuticals for ruminants are important in the field of, for example, feeds, nutrients and animal drugs for the ruminants which protect these biologically active substances from degradation by the microorganisms in the rumen and allow digestion and absorption thereof through the post-abomasum digestive organs.

It has been proposed for a long time to coat feed additives for ruminants containing biologically active substances with fatty acids having 12 or more carbon atoms, hardened animal/vegetable oils etc. Though particles coated with such fat or oil show improved protection in the rumen, it is difficult to dissolve the biologically active substance in the post-abomasum digestive organs.

In this respect, there has been proposed a method of adding another substance enhancing dissolution. In one case a biologically active substance is dispersed in protective substances, such as fats and oils and the mixture is granulated and in another case the biologically active substance is coated with protective substances, such as fats and oils.

As a method of dispersing biologically active substances in a protective substance, for example, Japanese Patent Laid-Open No. 60-168351 proposes a method of granulating biologically active substances, calcium carbonate in an amount of 20%, by weight, or more along with aliphatic monocarboxylic acids having 14 or more carbon atoms and hardened fats and oils etc. in an amount of 10%, by weight, or more. In addition, Japanese Patent Publication No. 59-10780 proposes a method of dispersing 30-50 % by weight of a biologically active substance in a protective substance consisting of 10-35 %, by weight, of a salt of an aliphatic monocarboxylic acid having 14 to 22 carbon atoms or of ricinoleic acid and balance of an aliphatic monocarboxylic acid having 14 to 22 carbon atoms, ricinoleic acid, hardened fats and oils or the like.

As a method for coating the biologically active substances with a protective substance, for example, Japanese Patent Publication Laid-Open No. 63-317053 proposes a method of coating biologically active substances with a protective agent consisting of an aliphatic monocarboxylic acid having 12-24 carbon atoms, hardened fats and oils, lecithin and glycerin esters of fatty acids.

However in the method of dispersing the biologically active substance in the protective substances the biologically active substance is also located on the surface of the particles. Accordingly the contents of the biologically active substance must be lowered significantly in order to become protected. It is furthermore difficult to provide satisfactory protection with consideration of the residence time of biologically active water-soluble substances in the rumen ranging from ten and several hours to several days. In addition, when the active substance is coated with a protective substance consisting of lecithin, glycerin esters of fatty acids, fats and oils, the strength of the coating layer is insufficient and the problem of protection still remains. Further, lecithin and glycerin esters of fatty acids are used expecting an emulsification of fats and oils. Said compounds show, however, insufficient dissolution considering the time required to pass through the post-abomasum digestive organs.

In addition, there has also been proposed a method of coating with a pH sensitive synthetic polymer by using the difference in pH between the rumen and the abomasum. This method is, however, not satisfactory since the use of an organic solvent for coating renders the coating expensive and complicated.

As mentioned above, in the case of products for oral administration to the ruminants, an important issue lies in the preparation of pharmaceuticals to prevent the biologically active substances from being released in the rumen and permit elution of the biologically active substances in the post-abomasum digestive organs. On the other hand, U.S. Patent No. 3,493,652 discloses controlled release from medical capsules comprising drugs, enzymes and substrates thereof. This document, however, discloses nothing about the preparation of pharmaceuticals to prevent the drug from being released in the rumen and it is thus difficult with this method to achieve sufficient absorption of the drug by the ruminants.

### Problems to be solved by the Invention

A problem to be solved by the present invention is the stable protection of a biologically active substance in the rumen of ruminants and effective digestion and absorption thereof via the post-abomasum digestive organs.

### Means to solve the Problem

Tremendous efforts have been made by the present inventors to achieve the above mentioned object and, as a result it has been found that digesting functions inherent to the post-abomasum digestive organs of the ruminant can be enhanced while at the same time excellent dissolution of the biologically active substance in post-abomasum digestive organs can be attained by providing a composition prepared by coating a core containing one or more biologically active substances with at least one protective substance selected from the group consisting of hardened vegetable fats and oils, hardened animal fats and oils, fatty acid esters and phospholipids, in which the coating component contains an enzyme being capable of hydrolyzing the coating component itself and/or an activator of the enzyme being capable of hydrolyzing the coating component, which is secreted from the post-abomasum digestive organs of the ruminant.

It has also been found that excellent protection in the rumen can be achieved when substantially no enzyme and no activator of the enzyme is present in the outermost surface portion of the coating layer, and thus the present invention is completed.

More specifically, a subject of the present invention is a granulated feed additive composition for ruminants composed of a core comprising a biologically active substance and a coating, which is characterized in that said coating comprises a composition comprising at least one substance A) selected from the group consisting of hardened vegetable fats and oils, hardened animal fats and oils, fatty acid esters and phospholipids, and at least one substance B) selected from the group consisting of (i) an enzyme being capable of hydrolysing at least one of said substances A) (hereinafter, merely referred to as enzyme) and (ii) an activator of an enzyme secreted from a post-abomasum digestive organ of the ruminant and being capable of hydrolysing at least one of said substances A) (hereinafter, merely referred to as activator of the enzyme) and a mixture of (i) and (ii), the outermost surface portion of the coating layer containing substantially no substance B).

The present invention is described in detail below. In the present invention, the biologically active substance may be one or a mixture of two or more selected from various known nutrients, feeds and drugs including substances such as amino acids and derivatives thereof, hydroxy homologous compounds of amino acids, proteins, carbohydrates, fats, vitamins and veterinary drugs.

More specifically, representative examples are: amino acids such as lysine, methionine, tryptophan and threonine; amino acid derivatives such as N-acylamino acid, calcium salts of N-hydroxymethylmethionine and lysine hydrochloride; hydroxy homologous compounds of amino acids such as 2-hydroxy-4-methylmercaptobutyric acid and salts thereof; natural nutrient powders such as grain powder, feather powder and fish powder; proteins such as casein, maize protein and potato protein; carbohydrates such as starch, sucrose and glucose; vitamins and substances having similar functions such as vitamin A, vitamin A acetate, vitamin A palmitate, vitamin B, thiamine, thiamine hydrochloride, riboflavin, nicotinic acid, nicotinamide, calcium pantothenate, choline pantothenate, pyridoxine hydrochloride, choline chloride, cyanocobalamin, biotin, folic acid, p-aminobenzoic acid, vitamin D2, vitamin D3 and vitamin E; tetracycline, aminoglycoside, macrolide and polyether antibiotics, anthelmintics such as Neguvon, helminthicides such as piperazine, and hormones such as estrogen, stilbestrol, hexestrol, thyroprotein, goitrogen and growth hormone.

There is no limitation to a method of preparing the core containing the biologically active substance. Granulated, preferably generally spherical particles are prepared via common granulation, fluidized bed granulation or agitation granulation with addition, if necessary, of a thickener or diluent bases.

Representative thickeners include cellulose derivatives such as hydroxypropylcellulose, methylcellulose and sodium carboxymethylcellulose, vinyl derivatives such as polyvinyl alcohol and polyvinyl pyrrolidone, arabic gum, guar gum, sodium polyacrylate and xanthan gum.

Representative diluent bases include starches, proteins and crystalline celluloses. If further required, calcium carbonate, calcium phosphate, talc etc. may be added as a weighting agent to adjust a specific gravity. Normally, it is preferred to adjust the specific gravity of the particles coated with the protective substance to a range from 0.9 to 1.4.

The protective substance for use in coating the core containing said biologically active substance may be at least one substance selected from the group consisting of hardened vegetable fats and oils, hardened animal fats and oils, fatty acid esters and phospholipid.

Representative hardened vegetable fats and oils include hardened palm oil, hardened palm kernel oil, hardened soy bean oil, hardened rape oil, hardened castor oil and so on. Applicable hardened animal fats and oils include hardened beef tallow, hardened lard and so on. The fatty acid ester used may be monoester, diester or the like of saturated or unsaturated fatty acid and glycerin. As the phospholipid, phosphatidyl choline, phosphatidyl serine, phosphatidyl ethanolamine, lecithin, lysolecithin and derivatives thereof may be used.

The enzyme used in the present invention may be any enzyme capable of hydrolyzing the protective substance coating the core. Examples include lipase, phospholipase and esterase or a mixture thereof. The enzymes may be of any origin as long as they hydrolyse the protective substance and those originated from microorganisms, animals and plants may e.g. be used. Examples of the microorganisms may be Aspergillus, Bacillus, Rhizopus, Saccharomyces, Pseudomonas, Mucor, Candida and Penicillium. Exemplified animals are cattle, pigs and so on. Exemplified plants include coconuts, ricinus seeds, rice, wheat germ and so on. The amount of the enzyme used is not limited specifically. For example, lipase may be used in an amount of at least 5 fat digestibility unit (Japanese Standard of Feed Additives) or more but not more than 1 million fat digestibility unit per 1 gram of the coating layer.

The activator of the enzyme used in the present invention may be of any origin such as e.g. from animals or plants. The activator of the enzyme may be used solely but, in practice, bile, pancreatic juice or extracts from gall bladder and pancreas are preferably used. There is no limitation on an amount thereof used. For example, bile powder may be used in an amount ranging from 0.5 milligrams to 100 milligrams, both inclusive, per 1 gram of the coating layer. An extract from the pancreas (general name "Pancreatin") may be used in an amount ranging from 0.1 milligrams to 10 milligrams, both inclusive, per 1 gram of the coating layer.

The enzyme and/or the activator of the enzyme used in the present invention have/has no solubility in the at least one protective substance selected from the group consisting of hardened vegetable fats and oils, hardened animal fats and oils, glycerin esters of fatty acid and phospholipid and are/is typically supplied as aggregated or powdered solids. To exhibit protection in the rumen and the dissolution in the post-abomasum digestive organs, the enzyme and/or the activator of the enzyme are/is required to be in the form of fine powder. A particle diameter thereof may advantageously be 100 µm or smaller. An average particle diameter of 50 µm or smaller facilitates formation of the coating surface containing substantially no enzyme and/or activator of the enzyme.

The feed additive composition for the ruminants according to the present invention is characterized in that the biologically active substance is coated using, as a coating substrate, a substance serving as the substrate for the above mentioned enzyme and that the outermost surface portion of the coating layer contains substantially no enzyme and/or activator of the enzyme. In this event, the term "the outermost surface portion contains substantially no enzyme and/or activator of the enzyme" means substantially no degradation activity to the coating substrate of the enzyme in question is expressed in the resident time between the rumen and the abomasum of the ruminant. Thus, this includes a case where no or an extremely small amount of enzyme and/or activator of the enzyme is contained and a case where the enzyme and/or the activator of the enzyme are/is contained together with an inhibitor.

Water is indispensable to express enzyme action. Contact between the enzyme and water causes hydrolysis of the substrate which is a basic substance of the coating layer. As a result of this, the coating layer disintegrates and the biologically active substance is dissolved. For the outermost surface layer, breakage of the coating layer is avoided in the rumen by means of preventing the enzyme from contacting with rumen fluid, which otherwise is caused due to hydrolysis action of the enzyme, thereby exhibiting a protective effect to avoid elution of the biologically active substance in the rumen. Accordingly, the thickness of the outermost surface layer may be adjusted depending on an amount of the enzyme and/or the activator of the enzyme to be added, the activity thereof, the composition of the outermost surface layer and so on. Typically, the outermost surface layer is defined as an area of four-fifth or less of the coating layer from the surface of the particle.

The particles in which the enzyme remained free from contact with the rumen fluid due to the protective effect of the outermost surface portion of the coating layer are subjected to the action of digestive enzymes secreted by the ruminant in the lower digestive organs at and after duodenum. As a result, the coating layer disintegrates and the biologically active substance is dissolved. The enzyme and/or the activator of the enzyme contained in the coating layer enhance(s) the effects of the digestive enzymes secreted by the ruminant and enhance(s) disruption of the coating layer as well as dissolution of the biologically active substance. In addition, substances such as an emulsifying agent, an emulsion stabilizer and an inorganic salt may be added as an dissolution enhancing additive to either or both of the coating outermost surface layer and a layer containing the enzyme and/or the activator of the enzyme, if necessary.

Exemplified emulsifying agents include lecithin, lysolecithin, enzyme-treated lecithin, fatty acids, metal salts of fatty acids, glycerin esters of fatty acids, sorbitan esters of fatty acids, propylene glycol esters of fatty acids, sucrose esters of fatty acids, sterol, sphingolipid and derivatives of cholic acid.

Exemplified emulsion stabilizers include arabic gum, alginic acid, propylene glycol alginate, welan gum, curdlan, gum ghatti, karaya gum, xanthan gum, chitin, chitosan, sodium chondroitin sulfate, guar gum, gellan gum, tamarind gum, tara gum, tragacanth gum, furcellaran, pullulan, pectin and locust bean gum.

Exemplified inorganic salts include dibasic calcium phosphate, calcium carbonate, sodium carbonate, sodium bicarbonate and calcium sulfate. In addition, wax and waxes may be added.

The enzyme and/or the activator of the enzyme need not necessarily be dispersed uniformly. For example a concentration gradient may be generated such that the coating layer has a lower content at a portion closer to the surface of the particle and has higher contents at an inner portion closer to the core.

The feed additive composition for the ruminants according to the present invention is characterized in that the core containing said biologically active substance is coated with said protective substance. The amount of the protective substance coated is preferably as small as possible to achieve higher contents of the biologically active material. However, such an amount is required that allows sufficient level of protection of the biologically active substance in the rumen and it is typically preferred to coat 10-200 parts, by weight, of the protective substance relative to 100 parts of the core containing the biologically active substance.

There is no specific limitation to a coating method and coating may be made by any one of the common coating processes such as fluidized bed coating, pan coating, melt coating, agitation coating and spray coating.

The granulated feed additive composition for the ruminants according to the present invention has a particle diameter of 3 mm or smaller but not smaller than 1.0 mm. The thickness of the coating layer usually ranges from 50 µm to 150 µm.

The present invention is described below in more detail in the context of a specifically delineated set of examples and controls. However, the scope of the present invention is not limited to those examples.

As to the biologically active substance, the dissolution volume of amino acids in the examples is analyzed through liquid chromatography.

### Protection in the Rumen

Approximately 1 g of a prepared sample was introduced into a 300 ml Erlenmeyer flask, into which 200 ml of Mc Dougall buffer solution equivalent to rumen fluid was poured and shaken at a temperature of 39°C for 24 hours. After shaking the dissolution volume of the biologically active substance was analyzed to calculate the protection in the rumen.

Mc Dougall buffer solution: a buffer solution obtained by dissolving the following reagents in 1000 ml water.
- Sodium bicarbonate: 7.43 g
- Disodium hydrogen phosphate · 12 H₂O: 7.00 g
- Sodium Chloride: 0.34 g
- Potassium Chloride: 0.43 g
- Magnesium Chloride · 6 H₂O: 0.10 g
- Calcium Chloride: 0.05 g

### Dissolution in the Abomasum

After completion of the protection test, the shaken sample was recovered and was then introduced into a 300 ml Erlenmeyer flask, into which 200 ml of Clark-Lubs buffer solution equivalent to gastric juice of the abomasum was poured and shaken at a temperature of 39°C for 4 hours. After shaking the dissolution volume of the biologically active substance was analyzed to calculate the protection in the abomasum.

Clark-Lubs buffer solution: a buffer solution obtained by dissolving the following reagents in 1000 ml:
- Potasssium Chloride: : 3.73 g
- Hydrochloric acid: : 2.1 ml

### Dissolution in the Small Intestine

After completion of the dissolution test in the abomasum, the shaken sample was recovered and was then introduced into a 300 ml Erlenmeyer flask, into which 200 ml of a buffer solution equivalent to intestine fluid was poured and shaken at a temperature of 39°C for 7 hours. After shaking the dissolution volume of the biologically active substance was analyzed to calculate the protection in the small intestine.

The total amount of the dissolution rate in the above mentioned solution equivalent to the gastric juice of the abomasum and the dissolution rate in the solution equivalent to the intestine fluid was determined as the dissolution rate in the post-abomasum digestive organs (hereinafter, referred to as the dissolution rate corresponding to the digestive organs).

### Example 1:

325 g of L-lysine monohydrochloride, 172.5 g of talc, 2.5 g of sodium carboxymethylcellulose and 135 g of water were fed into a kneader and were kneaded, and cylindrical granules were obtained by using an extruding granulator having a mesh screen of 1.5 mm ⌀. The resultant granules were shaped by using a spheronizer (marumerizer, manufactured by Fuji Paudal Co., Ltd.) to produce generally spheric granules. The resultant spherical granules were subjected to a fluidized bed drier, thereby obtaining cores containing L-lysine monohydrochloride in a particle size distribution from 1 mm to 2.5 mm in particle diameter.

A protective substance containing 1.68 parts, by weight, of Lipase A "AMANO" 6 (produced by Amano Pharmaceutical Co., Ltd.) was dissolved in 98.32 parts, by weight, of hardened beef tallow, which was coated on cores in a ratio of 35.8 parts, by weight, to 100 parts, by weight, of cores having an average particle diameter of 1.5 mm sieved through a screen. Subsequently, 7.2 parts, by weight, of dissolved hardened beef tallow was coated, on 100 parts, by weight, of cores. The above mentioned evaluation test was conducted on these coated particles, as a result of which the dissolution rate in the rumen was 9% and the dissolution rate corresponding to that in the digestive organs was 76%.

### Example 2:

1.4 parts, by weight, of Lipase A "AMANO" 6 (produced by Amano Pharmaceutical Co. Ltd.) and 5 parts, by weight, of lecithin were added to 93.6 parts, by weight, of hardened beef tallow, which were then mixed and melted. The coating composition was prepared in a same manner as in Example 1 and then coated on cores in a ratio of 14.3 parts, by weight, to 100 parts, by weight, of cores having an average particle diameter of 1.18 mm sieved through a screen. Subsequently, 5 parts, by weight, of lecithin were added to 95 parts, by weight, of hardened beef tallow, which were then mixed and melted. The coating composition was coated on cores in a ratio of 28.6 parts, by weight, to 100 parts, by weight, of cores to form the coating's outermost surface layer. The above mentioned evaluation test was conducted on these coated particles, as a result of which the dissolution rate in the rumen was 13% and the dissolution rate corresponding to that in the digestive organs was 78%.

### Example 3:

1.4 parts, by weight, of Lipase A "AMANO" 6 (produced by Amano Pharmaceutical Co., Ltd.), 5 parts, by weight, of lecithin and 5 parts, by weight, of calcium carbonate were added to 88.6 parts, by weight, of hardened beef tallow, which were then mixed and melted. The coating composition was prepared in the same manner as in Example 1 and coated on cores in a ratio of 21.5 parts, by weight, to 100 parts, by weight, of cores having an average particle diameter of 2.00 mm sieved through a screen. Subsequently, 5 parts, by weight, of lecithin and 5 parts, by weight, of calcium carbonate were added to 90 parts, by weight, of hardened beef tallow, which were then mixed and melted. The coating composition was coated on cores in a ratio of 21.5 parts, by weight, to 100 parts, by weight, of cores to form the coating's outermost surface layer. The above mentioned evaluation test was conducted on these coated particles, as a result of which the dissolution rate in the rumen was 14% and the dissolution rate corresponding to that in the digestive organs was 83%.

### Example 4:

1.4 parts, by weight, of Lipase A "AMANO" 6 (produced by Amano Pharmaceutical Co., Ltd.) and 5 parts, by weight, of lecithin were added to 93.6 parts, by weight, of hardened beef tallow, which were then mixed and melted. The coating composition was prepared in the same manner as in Example 1 and coated on cores in a ratio of 9.6 parts, by weight, to 100 parts, by weight, of cores having an average particle diameter of 2.36 mm sieved through a screen. Subsequently, 0.48 parts, by weight, of Lipase A "AMANO" 6 (produced by Amano Pharmaceutical Co., Ltd.) and 5 parts, by weight, of lecithin were added to 94.52 parts, by weight, of hardened beef tallow, which were then mixed and melted. The coating composition was coated on cores in a ratio of 6.2 parts, by weight, to 100 parts, by weight, of cores. Further, 5 parts, by weight, of lecithin were added to 95 parts, by weight, of hardened beef tallow, which were then mixed and melted. The resultant coating solution was coated in a ratio of 17.7 parts, by weight, to 100 parts, by weight, of cores to form the coating's outermost surface layer. The above mentioned evaluation test was conducted on these coated particles, as a result of which the dissolution rate in the rumen was 14% and the dissolution rate corresponding to that in the digestive organs was 80%.

### Example 5:

1.4 parts, by weight, of Lipase A "AMANO" 6 (produced by Amano Pharmaceutical Co., Ltd.) and 5 parts, by weight, of lecithin were added to 93.6 parts, by weight, of hardened beef tallow, which were then mixed and melted. The coating composition was prepared in the same manner as in Example 1 and coated on cores in a ratio of 14.3 parts, by weight, to 100 parts, by weight, of cores having an average particle diameter of 1.70 mm sieved through a screen. Subsequently, 5 parts, by weight, of lecithin and 5 part, by weight, of xanthan gum were added to 90 parts, by weight, of hardened beef tallow, which were then mixed and melted. The coating composition was coated on cores in a ratio of 28.6 parts, by weight, to 100 parts, by weight, of cores to form the coating's outermost surface layer. The above mentioned evaluation test was conducted on these coated particles, as a result of which the dissolution rate in the rumen was 13% and the dissolution rate corresponding to that in the digestive organs was 85%.

### Example 6:

Cores containing methionine were obtained in the same manner as in Example 1 with 325 g of methionine, 172.5 g of talc, 2.5 g of sodium carboxymethylcellulose and 100 g of water. 0.5 parts, by weight, of calf-pancreatin (produced by SIGMA Co., Ltd.) that was finely ground into an average particle diameter of 25 microns and 5 parts, by weight, of lecithin were added to 94.5 parts, by weight, of hardened beef tallow, which were then mixed and melted. The coating composition was prepared in the same manner as in Example 1 and coated on cores in a ratio of 14.3 parts, by weight, to 100 parts, by weight, of cores having an average particle diameter of 1.70 mm sieved through a screen. Subsequently, 5 parts, by weight, of lecithin was added to 95 parts, by weight, of hardened beef tallow, which were then mixed and melted. The coating composition was coated on cores in a ratio of 28.6 parts, by weight, to 100 parts, by weight, of cores to form the coating's outermost surface layer. The above mentioned evaluation test was conducted on these coated particles, as a result of which the dissolution rate in the rumen was 12% and the dissolution rate corresponding to that in the digestive organs was 82%.

### Example 7:

2 parts, by weight, of lecithin were added to 97.75 parts, by weight, of hardened beef tallow, which were then mixed and melted. 0.25 parts, by weight, of bile powder (produced by Wako Pure Chemical Ltd.) finely ground into an average particle diameter of 30 microns was added and suspended. The resultant coating composition was prepared in the same manner as in Example 1 and coated on cores in a ratio of 17.6 parts, by weight, to 100 parts, by weight, of cores having an average particle diameter of 1.8 mm sieved through a screen. Subsequently, 3 parts, by weight, of lecithin were added to 97 parts, by weight, of hardened beef tallow, which were then mixed and melted. The coating composition was coated on cores in a ratio of 15.7 parts, by weight, to 100 parts, by weight, of cores to form the coating's outermost surface layer. The above mentioned evaluation test was conducted on these coated particles, as a result of which the dissolution rate in the rumen was 14% and the dissolution rate corresponding to that in the digestive organs was 76%.

### Example 8:

2 parts, by weight, of oleic acid were added to 97.7 parts, by weight, of hardened beef tallow, which were then mixed and melted. 0.3 parts, by weight, of calf-pancreatin (produced by SIGMA Co., Ltd.) finely ground into an average particle diameter of 25 µm was suspended. The resultant coating composition was prepared in the same manner as in Example 1 and coated on cores in a ratio of 18.6 parts, by weight, to 100 parts, by weight, of cores having an average particle diameter of 1.7 mm sieved through a screen. Subsequently, 2 parts, by weight, of oleinic acid were added to 98 parts, by weight, of hardened beef tallow, which were then mixed and melted. The coating composition was coated on cores in a ratio of 12.4 parts, by weight, to 100 parts, by weight, of cores to form the coating's outermost surface layer. The above mentioned evaluation test was conducted on these coated particles, as a result of which the dissolution rate in the rumen was 12% and the dissolution rate corresponding to that in the digestive organs was 79%.

### Control 1:

A protective substance containing 1.4 parts, by weight, of Lipase A "AMANO" 6 (produced by Amano Pharmaceutical Co., Ltd.) (the same in amount as in Example 1) was dissolved in 98.6 parts, by weight, of hardened beef tallow, which was then coated on cores in a ratio of 42.9 parts, by weight, to 100 parts, by weight, of cores prepared in Example 1. The above mentioned evaluation test was conducted on these coated particles, as a result of which the dissolution rate in the rumen was 34% and the dissolution rate corresponding to that in the digestive organs was 41%.

### Control 2:

0.48 parts, by weight, of Lipase A "AMANO" 6 (produced by Amano Pharmaceutical Co., Ltd.) (the same amount as in Example 2), 5 parts, by weight, of lecithin and 5 parts, by weight, of calcium carbonate were added to and mixed with 89.52 parts, by weight, of hardened beef tallow. The resultant coating composition was melted and coated on cores in a ratio of 42.9 parts, by weight, to 100 parts, by weight, of cores prepared in Example 2. The above mentioned evaluation test was conducted on these coated particles, as a result of which the dissolution rate in the rumen was 53% and the dissolution rate corresponding to that in the digestive organs was 41%.

### Control 3:

42.9 parts, by weight, of melted hardened beef tallow was coated on the cores to 100 parts, by weight, of cores prepared in Example 1. The above mentioned evaluation test was conducted on these coated particles, as a result of which the dissolution rate in the rumen was 4% and the dissolution rate corresponding to that in the digestive organs was 5%.

### Control 4:

5 parts, by weight, of lecithin were added to 95 parts, by weight, of hardened beef tallow, which were then mixed and melted. The resultant coating composition was coated on the cores in a ratio of 42.9 parts, by weight, to 100 parts, by weight, of the cores prepared in Example 2. The above mentioned evaluation test was conducted on these coated particles, as a result of which the dissolution rate in the rumen was 15% and the dissolution rate corresponding to that in the digestive organs was 20%.

The above mentioned results are set forth in Table 1 and Table 2. It is apparent from Examples 1, 2, Controls 1 and 2 that those having no enzyme in the outermost surface portion of the coating layer exhibit superior protection in the rumen and dissolution in the post-abomasum digestive organs. In addition, it has been found that the feed additive compositions set forth in the Examples evidently have superior dissolution in the post-abomasum digestive organs compared with cases where no enzyme and/or activator of the enzyme is contained.

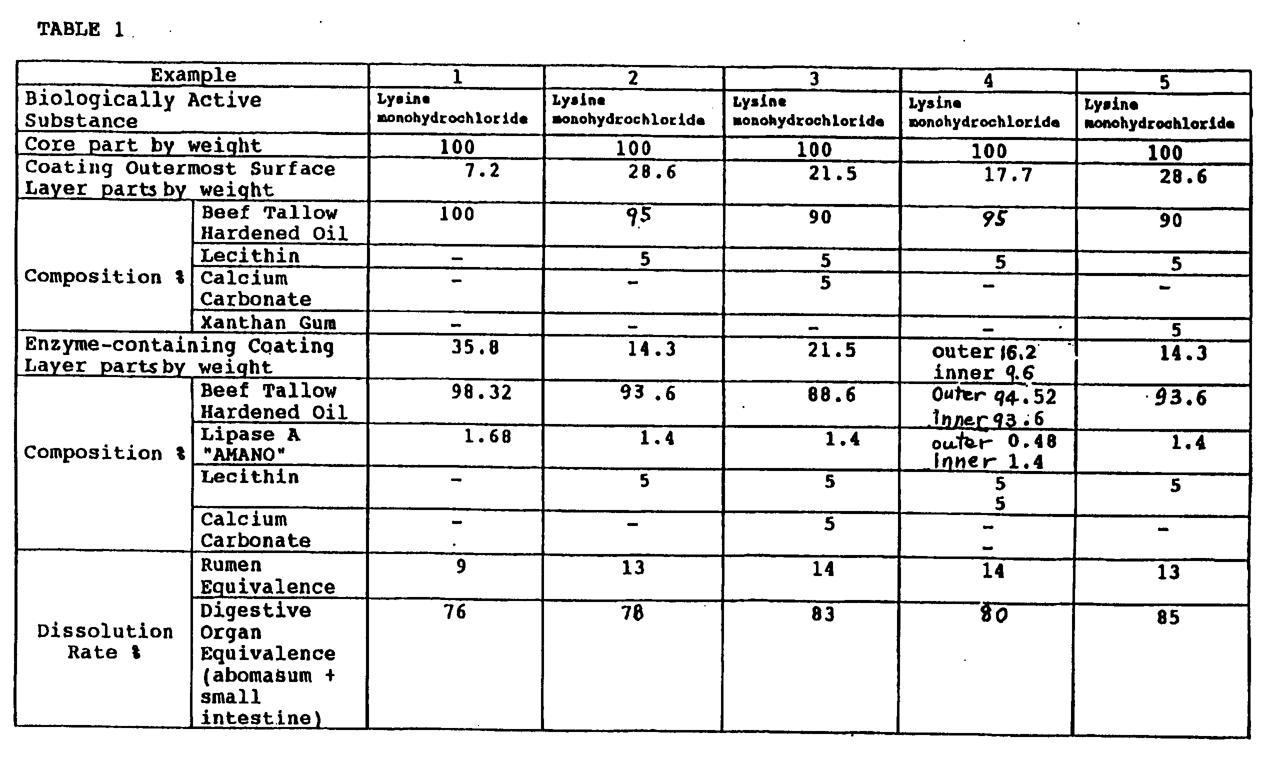

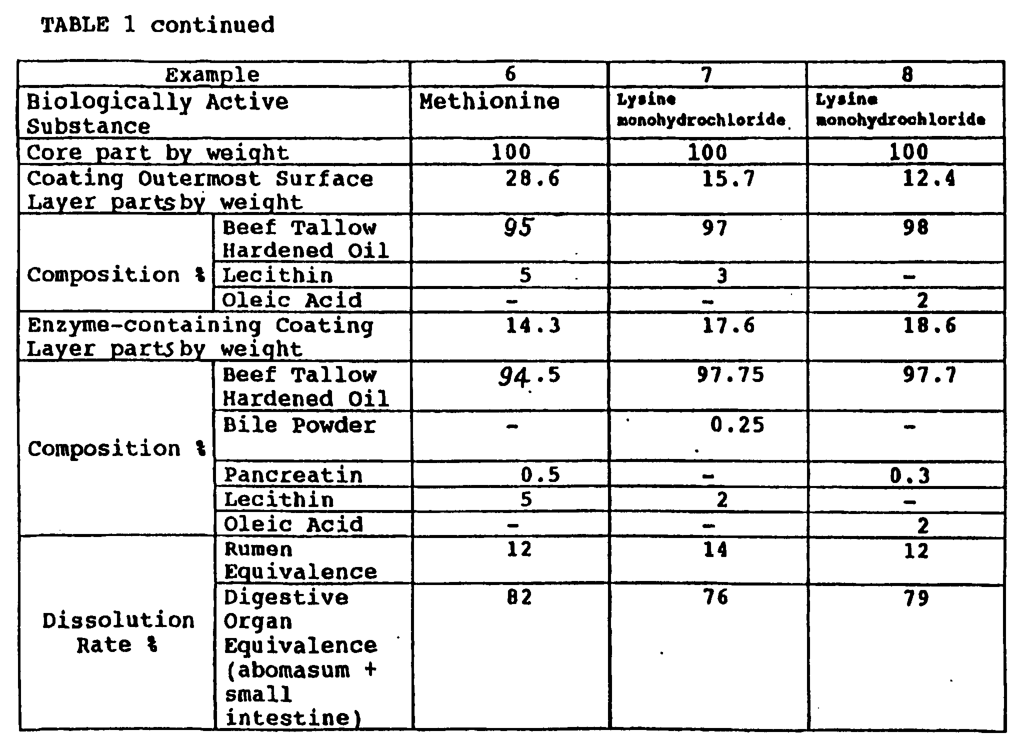

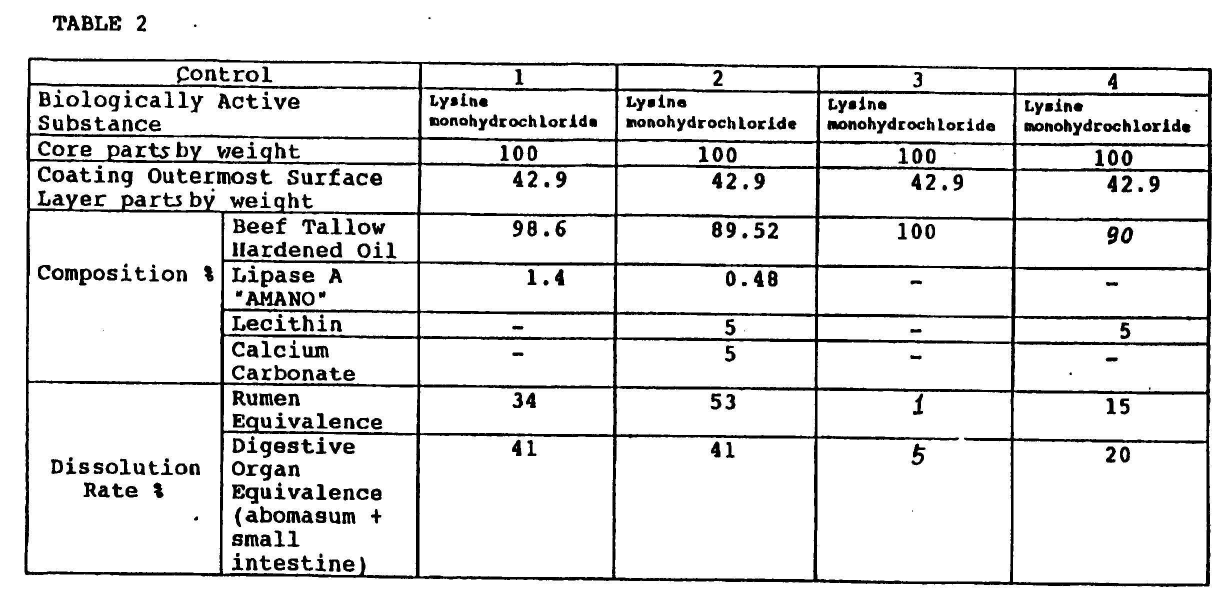

### Effect of the Invention

The core comprising the biologically active substance is coated with a coating composition comprising at least one substance A) selected from the group consisting of hardened vegetable fats and oils, hardened animal fats and oils, fatty acid esters and phospholipids and a substance B) selected among enzymes and/or an activator of the enzymes, the outermost surface portion of the coating layer containing substantially no enzyme and/or no activator of the enzyme. The composition exhibits excellent effects with respect to protection in the rumen as well as rapid dissolution in the post-abomasum lower digestive organs due to the action of the enzyme and/or the activator of the enzyme.

## Claims

1. A granulated feed additive composition for ruminants being composed of a core comprising a biologically active substance and a coating which comprises a composition comprising at least a substance A) selected from the group consisting of hardened vegetable fats and oils, hardened animal fats and oils, fatty acid esters and phospholipids, and at least a substance B) selected from the group consisting of (i) an enzyme being capable of hydrolysing at least one of said substances A) and (ii) an activator, capable of activating an enzyme secreted from a post-abomasum digestive organ of the ruminant and being capable of hydrolysing at least one of said substances A) and a mixture of (i) and (ii), wherein
the outermost surface portion of the coating layer contains no substance B) or contains substance B together with an inhibitor.

2. The feed additive composition for ruminants according to Claim 1 characterized in that said substance B) comprises at least one enzyme selected from the group consisting of lipase, phospholipase, esterase or a mixture thereof.

3. The feed additive composition for ruminants according to Claim 1 characterized in that said substance B) comprises at least one activator selected from bile powder and pancreatin.

4. The feed additive composition for ruminants according to any of the Claims 1 to 3 characterized in that the enzyme and/or the activator (substance B) in the coating composition is in the form of a fine powder having a particle diameter of 100 µm or less.

## Patentansprüche

1. Granulierte Futterzusatz-Zusammensetzung für Wiederkäuer, die aus einem eine biologisch aktive Substanz enthaltenden Kern und einem Überzug besteht, der eine Zusammensetzung enthält, die mindestens eine aus der aus gehärteten Pflanzenfetten und -ölen, gehärteten tierischen Fetten und Ölen, Fettsäureestern und Phospholipiden bestehenden Gruppe ausgewählte Substanz A) und mindestens eine Substanz B) enthält, die aus der aus (i) einem Enzym, das mindestens eine der Substanzen A) hydrolysieren kann, (ii) einem Aktivator, der ein Enzym aktivieren kann, das von einem dem Labmagen nachgelagerten Verdauungsorgan des Wiederkäuers ausgesondert wird, und das mindestens eine der Substanzen A) hydrolysieren kann, und einem Gemisch von (i) und (ii) bestehenden Gruppe ausgewählt ist,
worin der äußerste Oberflächenteil der Überzugsschicht keine Substanz B) oder Substanz B) zusammen mit einem Inhibitor enthält.

2. Futterzusatz-Zusammensetzung für Wiederkäuer gemäß Anspruch 1, dadurch gekennzeichnet, daß die Substanz B) mindestens ein Enzym enthält, das aus der aus Lipase, Phospholipase, Esterase oder ein Gemisch davon bestehenden Gruppe ausgewählt ist.

3. Futterzusatz-Zusammensetzung für Wiederkäuer gemäß Anspruch 1, dadurch gekennzeichnet, daß die Substanz B) mindestens einen Aktivator enthält, der unter Gallenpulver und Pankreatin ausgewählt ist.

4. Futterzusatz-Zusammensetzung für Wiederkäuer gemäß einem der Ansprüche 1 bis 3, dadurch gekennzeichnet, daß das Enzym und/oder der Aktivator (Substanz B) in der Überzugszusammensetzung in der Form eines feinen Pulvers mit einem Teilchendurchmesser von 100 µm oder weniger vorliegt.

## Revendications

1. Composition d'additif alimentaire granulée pour ruminants composée d'un noyau comprenant une substance biologiquement active et d'un enrobage comprenant une composition comprenant au moins une substance A) choisie dans le groupe constitué par les graisses et huiles végétales durcies, les graisses et huiles animales durcies, les esters d'acides gras et les phospholipides et au moins une substance B) choisie dans le groupe constitué par i) une enzyme capable d'hydrolyser au moins une desdites substances A) et (ii) un activateur, capable d'activer une enzyme sécrétée par un organe digestif de la partie post-caillette du ruminant et capable d'hydrolyser au moins une desdites substances A) et un mélange de (i) et (ii), dans laquelle
la partie superficielle externe de la couche d'enrobage ne contient pas de substance B) ou contient une substance B avec un inhibiteur.

2. Composition d'additif alimentaire pour ruminants selon la revendication 1, caractérisée en ce que ladite substance B) comprend au moins une enzyme choisie dans le groupe constitué par la lipase, la phospholipase, l'estérase ou un de leurs mélanges.

3. Composition d'additif alimentaire pour ruminants selon la revendication 1, caractérisée en ce que ladite substance B) comprend au moins un activateur choisi parmi la poudre de bile et la pancréatine.

4. Composition d'additif alimentaire pour ruminants selon une quelconque des revendications 1 à 3, caractérisée en ce que l'enzyme et/ou l'activateur (substance B) dans la composition d'enrobage sont sous la forme d'une poudre fine ayant un diamètre de particules de 100 µm ou moins.
